# EUROPÄISCHE PATENTSCHRIFT

(11) **EP 2 779 823 B1**
(45) Veröffentlichungstag und Bekanntmachung des Hinweises auf die Patenterteilung: **06.04.2016**
(21) Anmeldenummer: 11782626.3
(22) Anmeldetag: 16.11.2011
(51) Int. Cl.: A01G 27/04

(54) **BEWÄSSERUNGSEINRICHTUNG**
WATERING DEVICE
SYSTEME D'ARROSAGE

(43) Veröffentlichungstag der Anmeldung: 24.09.2014
(73) Patentinhaber: HUSQVARNA AB, 561 82 Huskvarna (SE)
(72) Erfinder: ASAL, Benjamin, 89155 Erbach-Ersingen (DE)
(74) Vertreter: Finkele, Rolf
(86) Internationale Anmeldenummer: PCT/EP2011/070295
(87) Internationale Veröffentlichungsnummer: WO 2013/071968

(56) Entgegenhaltungen:
- DE-A1- 1 912 083
- DE-B- 1 030 096
- DE-B- 1 064 281
- US-A- 4 339 891
- US-A- 4 389 815

## Beschreibung

Die Erfindung betrifft eine Bewässerungseinrichtung für Topfpflanzen mit einer nach dem Kapillareffekt arbeitenden Wassertransportleitung.

Für die Bewässerung von Topfpflanzen sind seit langem Wassertransportleitungen aus faserigem Material bekannt, welche durch die Wirkung des Kapillareffekts Wasser aus einem Vorratsbehälter entgegen der Schwerkraft zu einem höher gelegenen Pflanzsubstrat in einem Pflanzgefäß transportieren und dosiert an das Pflanzsubstrat abgeben.

In einfachster Ausführung sind solche Wassertransportleitungen aus Wollfäden oder anderen haushaltsüblichen Fasermaterialsträngen ausgebildet, welche auch durch wasserdichte Führungshüllen umgeben sein können.

Aufwendigere Ausführungen von Bewässerungseinrichtungen weisen typischerweise einen Wasservorratsbehälter mit einem eine Topfstellfläche bildenden Deckel auf. Die Wassertransportleitung kann durch Öffnung des Wasservorratsbehälters aus diesem heraus und über den Topfrand des Pflanztopfes zu dem Pflanzsubstrat geführt sein, wie z.B. in der US 4 339 891 offenbart.

Neben den fadenförmigen Wassertransportleitungen sind auch Ausführungen gebräuchlich, bei welchen das faserige Material ein Faserband bildet.

Bei aus der GB 2 198 324 A oder der US 6 131 334 bekannten Einrichtungen sind Dochte an vom Boden eines Wasserreservoirs nach oben stehenden Stützen gehalten und hängen mit ihren Enden in das Wasserreservoir.

Die US 2011/0036007 A1 zeigt eine Bewässerungseinrichtung, bei welcher ein Vorratsbehälter starr mit einem Erdspieß verbunden ist und bei in ein Pflanzsubstrat eines Pflanztopfes eingestecktem Erdspieß seitlich neben dem Pflanztopf gehalten ist. Über einen Docht wird Wasser aus dem Behälter in das Pflanzsubstrat transportiert. Da der Wasserspiegel im Vorratsbehälter ungefähr auf Höhe des Erdspießes liegt, besteht die Gefahr einer Überbewässerung.

Bei einer aus der US 4 782 627 bekannten Einrichtung mit seitlich an einen Pflanztopf angehängtem Vorratsbehälter erfolgt der Wassertransport mit einstellbarer Flussrate über eine Hintereinanderschaltung zweier Wassertransportleitungen.

Dem Bewässerungsbedarf am besten gerecht werden Docht-Bewässerungseinrichtungen mit unterhalb des Pflanzsubstrats befindlichem Wasservorratsbehälter. Besonders einfach aufgebaut und vom Benutzer leicht verständlich handhabbar sind solche Bewässerungseinrichtungen mit vom Wasservorratsbehälter seitlich außerhalb des Pflanztopfs über dem Topfrand in das Pflanzsubstrat führender Wassertransportleitung.

Der vorliegenden Erfindung liegt die Aufgabe zugrunde, eine solche Topfpflanzen-Bewässerungseinrichtung mit vorteilhaft einfacher und sicherer Handhabbarkeit anzugeben.

Die Erfindung ist im unabhängigen Anspruch beschrieben. Die abhängigen Ansprüche enthalten vorteilhafte Ausgestaltungen und Weiterbildungen der Erfindung.

Die Anordnung einer Halteeinrichtung für den Faserstrang der Wassertransportleitung an der Deckelanordnung ermöglicht vorteilhafterweise die Handhabung der Deckelanordnung und der Wassertransportleitung gemeinsam mit einem auf der Deckelanordnung stehenden Pflanztopf, beispielsweise beim Abnehmen der Deckelanordnung vom Wasservorratsbehälter, ohne dass das mit dem Pflanzsubstrat im Pflanztopf in Kontakt stehende zweite Ende oder das in den Wasserbehälter ragende Ende gelöst werden muss.

An der Deckelanordnung ist auch ein Befestigungselement vorgesehen, an welchem das erste Ende der Wassertransportleitung zugfest befestigbar ist, so dass bei versehentlichem Zug an einem außerhalb der Wasservorratseinrichtung verlaufenden Abschnitt der Wassertransportleitung diese nicht vollständig aus der Wasservorratseinrichtung gezogen werden kann. Dieses Befestigungselement und eine Durchführung für die Wassertransportleitung durch die Wasservorratseinrichtung sind an im Längsverlauf des Faserstrangs entgegen gesetzten Seiten der Halteeinrichtung angeordnet. Vorzugsweise ist auch die Durchführung durch die Wasservorratseinrichtung an der Deckelanordnung ausgebildet, so dass eine Wassertransportleitung besonders vorteilhaft mit der Wasservorratseinrichtung verbindbar ist, indem die Wassertransportleitung unabhängig vom Wasserbehälter nur mit der Deckelanordnung verbunden werden muss.

In besonders vorteilhafter Ausführung ist die Halteeinrichtung als ein Halteelement mit einer dem Boden des Wasservorratsbehälters zu weisenden Unterkante ausgeführt, wobei im zusammengefügten Zustand von Deckelanordnung und Wasservorratsbehälter zu der Wasservorratseinrichtung zwischen Unterkante des Halteelements eine Passage für die Wassertransportleitung, insbesondere für den Faserstrang, gebildet ist. Hierdurch ist zum einen ein besonders einfaches Einlegen des Faserstrangs in die Halteeinrichtung ohne Durchfädeln durch eine enge Öffnung möglich und zum anderen ein Halten des Faserstrangs in unmittelbarer Nähe des Bodens gewährleistet, so dass der Faserstrang zuverlässig bis zu sehr niedrigen Wasserständen im Wasservorratsbehälter Wasser aus diesem aufnehmen kann.

Vorteilhafterweise weist die Wassertransportleitung über ihren außerhalb der Wasservorratseinrichtung verlaufenden Abschnitt eine den Faserstrang umgebende, wasserdichte und vorzugsweise auch dampfdichte schlauchförmige Hülle auf. Am ersten Ende der Wassertransportleitung ist der Faserstrang in einem ersten Endabschnitt von der Hülle befreit, wobei der erste Endabschnitt bei an der Deckelanordnung gespannt verlaufender Wassertransportleitung von der Befestigungseinrichtung über die Halteeinrichtung hinaus reicht, aber vor der Durchführung durch die Deckelanordnung endet, so dass an der Durchführung bereits der Faserstrang mit Hülle vorliegt.

Die Passage für den Faserstrang zwischen der Unterkante eines Halteelements der Halteeinrichtung und dem Boden des Vorratsbehälters ist vorteilhafterweise so bemessen, dass der Faserstrang, gegebenenfalls auch unter Einklemmung, durch die Passage verläuft, dass aber die Hülle nicht durch die Passage geschoben werden kann. Hierdurch wird vermieden, dass bei einer bevorzugten Ausführung, bei welcher die Wasservorratseinrichtung einen Stauraum für einen außerhalb der Wasservorratseinrichtung nicht benötigten Längenabschnitt der Wassertransportleitung bilden kann, sich die Hülle durch die Passage schieben und den frei liegenden ersten Endabschnitt des Faserstrangs vom Boden des Wasservorratsbehälters über den Wasserspiegel im Wasservorratsbehälter anheben kann. Dies gewährleistet auch bei einer solchen bevorzugten Ausführung einen zuverlässigen Kontakt des frei liegenden Faserstrangs mit dem Wasser im Wasservorratsbehälter. Der Stauraum für nicht benötigte Leitungslänge der Wassertransportleitung ist in vorteilhafter Ausführung auf einen Teilraum des Innenraums der Wasservorratseinrichtung beschränkt. Insbesondere kann die Unterkante des Halteelements an einer Unterkante einer Trennwand vorgesehen sein. Der Faserstrang ist vorzugsweise bandförmig ausgebildet, wobei zwei oder mehr Lagen übereinander liegen können. Die Passage zwischen Unterkante des Halteelements und Boden des Wasservorratsbehälters bildet für einen solchen Faserstrang vorteilhafterweise einen zum Boden parallelen Spalt geringer Höhe.

Die Erfindung ist nachfolgend anhand bevorzugter Ausführungsbeispiele unter Bezugnahme auf die Abbildungen noch eingehend veranschaulicht. Dabei zeigt:
- Fig. 1: einen Schnitt durch eine Bewässerungseinrichtung samt Pflanztopf,
- Fig. 2: eine Bewässerungseinrichtung mit abgehobener Durchlaufanordnung,
- Fig. 3: eine zusammengefügte Bewässerungseinrichtung,
- Fig. 4: eine Ansicht nach IV - IV von Fig. 3,
- Fig. 5: die Bewässerungseinrichtung nach Fig.3 mit teilweise eingeschobener Wassertransportleitung.

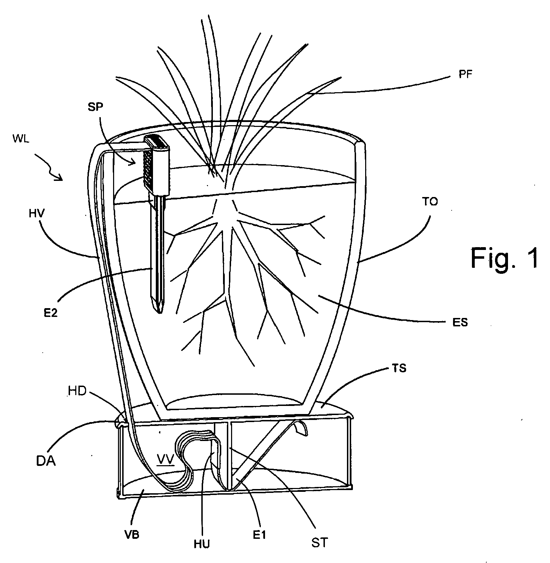

Fig. 1 zeigt in teilweise geschnittener Ansicht eine Topfpflanzen-Bewässerungseinrichtung einschließlich eines Pflanztopfes TO mit einer Pflanze PF, die in einem Pflanzsubstrat ES wurzelt. Der Pflanztopf TO ist auf einer Stellfläche TS der Abdeckung eines Wasservorratsbehälters abgestellt. Die Wasservorratseinrichtung besitzt ein Vorratsvolumen VV in einem topfförmigen Vorratsbehälter VB. Der Behälter VB ist durch eine Deckelanordnung DA überdeckt. Eine Wassertransportleitung WL ist durch eine Durchführung HD in der Deckelanordnung DA aus dem Vorratsvolumen VV hinaus geführt und zu einem Erdspieß SP geleitet, welcher mit einer Spitze in das Pflanzsubstrat ES eingesteckt ist. Die Wassertransportleitung WL enthält insbesondere eine wasserdichte und vorzugsweise auch dampfdichte Hülle HU und innerhalb dieser einen Wasser auf der Basis des Kapillareffekts entgegen der Schwerkraft transportierenden Faserstrang, im skizzierten Beispiel ein Faserband, welches an beiden Enden über die Hülle HU hinaus verlängert ist und mit einem ersten frei liegenden Ende E1 mit Wasser im Vorratsbehälter VB zur Aufnahme von Wasser in Kontakt steht und mit einem zweiten frei liegenden Ende E2 am Erdspieß mit dem Pflanzsubstrat ES zur Abgabe von Wasser an das Pflanzsubstrat in Kontakt steht. Über einen von der Stellfläche TS der Deckelanordnung DA nach unten in das Vorratsvolumen VV ragenden Steg ST ist gewährleistet, dass zumindest ein Teil des frei liegenden ersten Endes E1 des Faserbandes auch bei niedrigem Wasserstand im Vorratsbehälter noch mit Wasser in Kontakt steht.

Die Hülle HU erstreckt sich in Längsrichtung der Wassertransportleitung WL vorteilhafterweise bis zu dem Erdspieß SP und ist dort mechanisch festgelegt, beispielsweise eingeklemmt, wobei die Einklemmung in der Art ist, dass die Hülle HU zugfest am Erdspieß SP gehalten ist, ohne dass aber der Wassertransport durch das Faserband beeinträchtigt ist. Die Verbindung der Hülle HU mit dem Erdspieß SP ist vorzugsweise so, dass der Erdspieß SP mit einer Einführungsöffnung für die Hülle HU eine definierte Ausrichtung des Erdspießes relativ zum oberen Rand des Pflanztopfes TO vorgibt.

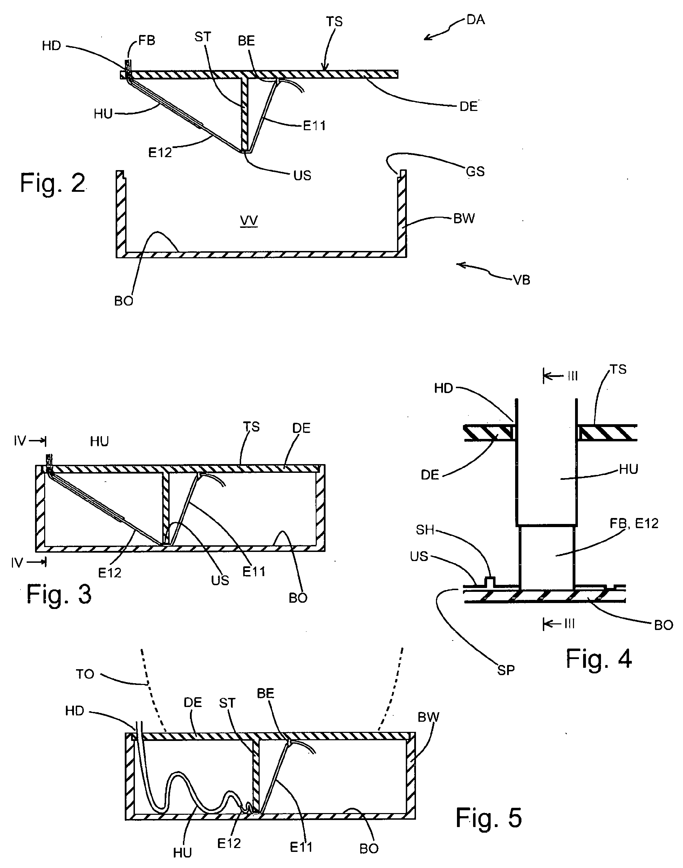

Fig. 2 zeigt eine Wasservorratseinrichtung mit einem Vorratsbehälter VB und einer Deckelanordnung DA, wobei die Deckelanordnung DA von dem Vorratsbehälter VB getrennt ist. Die Situation nach Fig. 2 tritt typischerweise auf, wenn eine Wassertransportleitung erstmalig in ihre Betriebsstellung an der Deckelanordnung DA gebracht wird oder wenn die Deckelanordnung DA vom Vorratsbehälter VB, beispielsweise für Reinigungszwecke, abgenommen wurde und erneut aufgesetzt wird.

An der Deckelanordnung DA ragt als Halteelement einer Halteeinrichtung ein Steg ST, welcher vorzugsweise sich senkrecht zur Zeichenebene der Fig. 2 weiter erstreckt als die Breite der bandförmigen Wassertransportleitung, von einer Deckelplatte DE nach unten ab. Der Steg ST kann insbesondere auch eine Zwischenwand im Vorratsbehälter bilden. Die Deckelanordnung DA ist in Fig. 2 bereits in ihrer richtigen Ausrichtung relativ zum Vorratsbehälter VB dargestellt und wird zum Zusammenfügen mit dem Vorratsbehälter VB nach unten abgesenkt.

Bei von dem Vorratsbehälter VB gelöster Deckelanordnung DA ist die Unterseite der Deckelanordnung DA für den Benutzer zugänglich und das erste Ende E1 des Faserbandes der Wassertransportleitung kann vorteilhafterweise an einem Befestigungselement BE befestigt werden. Das in Fig. 1 mit E1 bezeichnete erste Ende des Faserbandes ist in Fig. 2 nach zwei Endabschnitten E11 und E12 unterteilt, welche auf gegenüber liegenden Seiten des Halteelements ST verlaufen. Die Durchführung HD für die Wassertransportleitung durch die Deckelplatte DE der Deckelanordnung ist hierfür auf der dem Befestigungselement BE entgegen gesetzten Seite des Halteelements ST angeordnet und das Faserband ist über eine Unterkante US des Halteelements ST geführt. Das Befestigungselement BE kann beispielsweise in vorteilhaft einfacher Ausführung ein von der Unterseite der Deckelplatte DE abstehendes Element mit einer Hinterschneidung, beispielsweise in Form eines Hakens, sein, welches das Faserband durchgreift. Das Befestigungselement BE kann auch an anderer Position der Deckelanordnung, beispielsweise an einer erhöhten Position des Halteelements ST angeordnet sein.

In der in Fig. 2 dargestellten Situation ist die Wassertransportleitung mit dem durch eine wasserdichte Hülle HU umgebenen Abschnitt durch die Durchführung HD in der Deckelplatte DE hindurch geführt und in ihrem Verlauf unterhalb der Deckelplatte DE gespannt, so dass eine eindeutige Positionierung der Wassertransportleitung in ihrem Verlauf unterhalb der Deckelplatte DE gewährleistet ist. Vorteilhafterweise kann die Hülle HU ein geringes Übermaß gegen die Durchführung HD in einer Dimension, beispielsweise in Richtung der Flächennormalen der Bandform der Wassertransportleitung aufweisen, so dass die Wassertransportleitung von sich aus in der in Fig. 2 dargestellten gespannten Position gehalten ist und der Benutzer beide Hände frei hat, um die Deckelanordnung DA in korrekter Position in den Vorratsbehälter VB abzusenken und auf diesen aufzusetzen. Beim Absenken der Deckelanordnung DA treten die unterhalb der Deckelanordnung DE angeordneten Elemente, also insbesondere das Halteelement ST und der unter der Deckelplatte DE verlaufende Abschnitt der Wassertransportleitung in das Vorratsvolumen W des Vorratsbehälters VB ein. Das Vorratsvolumen W ist durch die Seitenwände BW und den Boden BO des Vorratsbehälters VB begrenzt und nach oben offen. Zwischen der Deckelanordnung DA und dem Vorratsbehälter VB sind korrespondierende Strukturen ausgebildet, welche im zur Wasservorratseinrichtung zusammen gefügten Zustand von Vorratsbehälter VB und Deckelanordnung DA eine horizontal und vertikal definierte Relativposition von Deckelanordnung DA und Vorratsbehälter VB formschlüssig sicher stellen. Lediglich beispielhaft ist in Fig. 2 hierfür eine Stufe GS in den Behälterwänden BW als eine einfache Ausführung angedeutet. Für eine formschlüssige Lagesicherung zwischen Deckelanordnung DA und Vorratsbehälter VB sind eine Vielzahl von Ausführungsformen vorstellbar. Insbesondere kann die Deckelplatte DE auch die Oberkanten der Seitenwände BW des Wasservorratsbehälters VB übergreifen.

Fig. 3 zeigt die Situation nach Absenken der Deckelanordnung auf den Vorratsbehälter VB. Die Deckelplatte DE liegt lagegesichert innerhalb der in Fig. 2 mit GS bezeichneten Strukturen und ist dort vertikal und horizontal fixiert. Die Unterkante US des Halteelements ST fixiert das Faserband zwischen den Bandabschnitten E11 und E12 in unmittelbarer Nähe zum Boden BO des Wasservorratsbehälters. Der Boden BO ist im skizzierten Beispiel der Einfachheit halber als eine ebene Fläche dargestellt, kann aber auch nicht eben ausgeführt sein. Insbesondere kann der Abschnitt des Bodens, an welchem das Faserband zwischen den Abschnitten E11 und E12 durch das Halteelement gehalten ist, eine Bodenvertiefung bilden, in welcher sich auch letzte Wasserreste sammeln und vom Faserband aufgenommen werden können. In gegenteiliger Ausführung kann der Bodenbereich, an welchem das Faserband durch das Halteelement gehalten ist, auch gegen eine oder mehrere tiefste Positionen des Bodens BO leicht erhöht sein, damit sich eventuelle Schmutzbestandteile des Wassers bevorzugt an den vertieften Stellen sammeln und der Bereich, in welchem die Unterkante US des Halteelements das Faserband am Boden hält, von solchen Verschmutzungen frei bleibt.

Fig. 4 zeigt eine Ansicht zu der Situation nach Fig. 3 mit Blickrichtung auf eine Schnittebene IV - IV nach Fig. 3. In dieser Darstellung ist eine bevorzugte Ausführung der Unterkante US des Halteelements ST dargestellt, wobei das Halteelement ST als eine sich in Fig. 3 quer zur Zeichenebene, in Fig. 4 in der Zeichenebene über die Breite der bandförmigen Wassertransportleitung hinaus erstreckende Zwischenwand angenommen sei. Die Unterkante US weist in dem dargestellten bevorzugten Ausführungsbeispiel einen im wesentlichen geraden und der Bodenfläche BO des Wasservorratsbehälters folgenden Verlauf auf.

Insbesondere ist in dem Bereich der Unterkante US des Halteelements, in welchem das Faserband durch das Halteelement gehalten ist, durch die Unterkante ein Spalt SP gegenüber der Bodenfläche BO des Wasservorratsbehälters gebildet. Die Höhe des Spaltes SP ist vorteilhafterweise so auf das Faserband und dessen wasserdichte Hülle abgestimmt, dass das Faserband in seinem Verlauf zwischen den Endabschnitten E11 und E12 durch den Spalt SP unter dem erhöhten Abschnitt SH der Unterkante US hindurch geführt werden kann, ohne die vertieften Kantenabschnitte SL vom Boden abzuheben, dass aber die Hülle HU nicht durch den Spalt SP durchschiebbar ist. Die Höhe des Spaltes SP kann dabei gegenüber der Dicke des Faserbandes in dessen entspanntem Zustand reduziert sein, so dass das Faserband in dem Spalt SP eingeklemmt gehalten ist. Eine Beeinträchtigung der Wasseraufnahmefähigkeit des ersten Endes des Faserbandes für den Transport zum zweiten Ende des Faserbandes ist dadurch nicht gegeben, da der Endabschnitt E12 immer Wasser aufnehmen und über das Faserband ungehindert abtransportieren kann. Die Höhe des Spaltes SP kann beispielsweise in der Größenordnung von 1 mm liegen. Über zusätzliche, vom Boden weiter nach oben ragende Ausschnitte SH in dem Steg ST ist ein problemloser Wasserfluss zwischen verschiedenen Teilräumen des Vorratsbehälters auch bei durch das Vorratsvolumen VV durchgehenden Trennwand als Steg ST gewährleistet ist.

Nachdem die Wasservorratseinrichtung wie in Fig. 3 und Fig. 4 dargestellt zusammengesetzt ist, kann auf die Stellfläche TS der Deckelanordnung ein Pflanztopf TO aufgesetzt werden, was in Fig. 5 illustriert ist. Die Größe des Pflanztopfes bestimmt die außerhalb der Wasservorratseinrichtung benötigte Mindestlänge der Wassertransportleitung zum in Fig. 1 dargestellten Erdspieß. Vorteilhafterweise ist ein außerhalb der Wasservorratseinrichtung nicht benötigter Längenanteil der Wassertransportleitung durch Relativverschiebung der Hülle HU in der Durchführung HD in das Vorratsvolumen VV auf dessen der Durchführung HD zugewandter Seite des Halteelements ST einschiebbar. Die Wassertransportleitung nimmt in dem Teilvolumen zwischen Halteelement ST und Durchführung HD einen gegebenenfalls mehrfach umgelenkten Verlauf ein, wie in Fig. 5 dargestellt ist. Durch die beschriebene Bemessung des Spalts SP zwischen der Unterkante des Halteelements ST und dem Boden BO ist zuverlässig verhindert, dass die Hülle HU sich durch den Spalt in den in Fig. 5 rechts liegenden Teilraum des Vorratsvolumens des Wasserbehälters VB verschieden und im ungünstigen Fall den frei liegenden Endabschnitt des Faserbandes vom Boden BO abheben könnte. Vielmehr verbleibt zumindest im Bereich der Unterkante des Halteelements das frei liegende Faserband immer in einem Bereich, in welchem auch bei niedrigen Füllständen im Wasservorratsbehälter Kontakt zu dem Wasservorrat besteht. Der Endabschnitt E11 des Faserbandes ist in Fig. 5 als gegenüber Fig. 3 unverändert gestreckt dargestellt, was aber nicht als zwingend angesehen wird.

Die Wasservorratseinrichtung besitzt zweckmäßigerweise noch eine in den Abbildungen nicht mit dargestellte Befülleinrichtung, beispielsweise eine Öffnung mit einem Vorsprung in der Seitenwand BW oder einer Aussparung in der Deckelplatte DE, durch welche Wasser in den Wasservorratsbehälter nachgefüllt werden kann, ohne die Deckelanordnung vom Vorratsbehälter abzuheben. Ferner kann eine Füllstandsanzeige für den Wasserbehälter, beispielsweise in Form eines Schwimmers oder vorzugsweise in Form eines Sichtfensters in der Seitenwand BW vorgesehen sein, über welche der Füllstand ohne Abnehmen der Deckelanordnung überprüfbar ist.

Das Halteelement ST kann als Zwischenwand zusätzlich durch gegen den in Fig. 4 dargestellten Verlauf nach unten bis zum Boden BO ragende, vertiefte Unterkantenabschnitte zugleich eine mechanische Stabilisierung der durch den Pflanztopf TO belasteten Deckelplatte DE bilden. Eine Abstützung der Deckelplatte kann auch durch andere, in den Abbildungen nicht dargestellte Stützelemente gegeben sein.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen der nachfolgenden Ansprüche in mancherlei Weise abwandelbar.

## Patentansprüche

1. Bewässerungseiririchtung für Topfpflanzen mit einer Wasservorratseinrichtung und einer Wassertransportleitung (WL) mit einem nach dem Kapillareffekt wirkenden Faserstrang (FB), wobei
- die Wasservorratseinrichtung einen nach oben offenen Vorratsbehälter (VB) und eine diesen abnehmbar verschließende Deckelanordnung (DA) umfasst,
- an der Wasservorratseinrichtung eine Durchführung (HD) für die Wassertransportleitung ausgebildet ist,
- an der Deckelanordnung (DA) eine im zusammengesetzten Zustand nach unten in den Vorratsbehälter (VB) ragende Halteeinrichtung (ST) vorgesehen ist,
- die Halteeinrichtung (ST) zum Führen eines Abschnitts (E1) des Faserstrangs (FB) im Bodenbereich (BO) des Vorratsbehälters (VB) ausgebildet ist,
**dadurch gekennzeichnet,**
**dass** an der Deckelanordnung (DA) ein Befestigungselement (BE) zur zugfesten Befestigung der Wassertransportleitung (WL) vorgesehen ist, wobei das Befestigungselement (BE) auf einer der Durchführung (HD) abgewandten Seite der Halteeinrichtung angeordnet und zur Befestigung des Fäserbandes (FB, E11) ausgebildet ist.

2. Bewässerungseinrichtung nach Anspruch 1, **dadurch gekennzeichnet, dass** die Halteeinrichtung (ST) mit einer dem Boden (BO) des Vorratsbehälters (VB) zuweisenden Unterkante (US) eine enge Passage (SP) für den Faserstrang (FB) bildet.

3. Bewässerungseinrichtung nach Anspruch 1, **dadurch gekennzeichnet, dass** die Wassertransportleitung (WL) im Verlauf außerhalb der Durchführung (HD) der Wasservorratseinrichtung eine wasserdichte Hülle (HU) um den Faserstrang (FB) aufweist.

4. Bewässerungseinrichtung nach Anspruch 3, **dadurch gekennzeichnet, dass** die Halteeinrichtung (ST) mit einer dem Boden (BO) des Vorratsbehälters (VB) zuweisenden Unterkante (US) eine enge Passage (SP) für den Faserstrang (FB) bildet.

5. Bewässerungseinrichtung nach Anspruch 4, **dadurch gekennzeichnet, dass** die Passage (SP) so eng bemessen ist, dass nur der Faserstrang (FB) ohne Hülle (HU) durchführbar ist.

6. Bewässerungseinrichtung nach Anspruch 4 oder 5, **dadurch gekennzeichnet, dass** die Passage (SP) einen zum Boden (BO) parallelen Spalt bildet.

7. Bewässerungseinrichtung nach Anspruch 2, **dadurch gekennzeichnet, dass** die Passage (SP) einen zum Boden (BO) parallelen Spalt bildet.

8. Bewässerungseinrichtung nach einem der Ansprüche 3 bis 6, **dadurch gekennzeichnet, dass** die Hülle (HU) in ihrer Längsrichtung relativ zu der Durchführung verschiebbar ist und der Vorratsbehälter (VB) einen Stauraum für die Wassertransportleitung (WL) aufweist.

9. Bewässerungseinrichtung nach einem der Ansprüche 1 bis 8, **dadurch gekennzeichnet, dass** der Faserstrang (FB) bandförmig ausgebildet ist.

## Claims

1. Watering device for pot plants, having a water-storage device and a water-transporting line (WL) with a fibre strand (FB) acting in accordance with the capillary effect, wherein
- the water-storage device comprises a storage container (VB), which is open in the upward direction, and a lid arrangement (DA), which closes said storage container in a removable manner,
- a feedthrough (HD) for the water-transporting line is formed on the water-storage device,
- the lid arrangement (DA) has provided on it a retaining device (ST) which, when the unit is in the assembled state, projected downwards into the storage container (VB),
- the retaining device (ST) is designed for guiding a portion (E1) of the fibre strand (FB) in the base region (BO) of the storage container (VB),
**characterized**
**by** the provision, on the lid arrangement (DA), of a fastening element (BE) for fastening the watertransporting line (WL) in a tension-resistant manner, wherein the fastening element (BE) is arranged on a side of the retaining device which is directed away from the feedthrough (HD), and it is designed for fastening the fibre band (FB, E11).

2. Watering device according to Claim 1, **characterized in that** the retaining device (ST) uses a lower edge (US), which is directed towards the base (BO) of the storage container (VB), to form a narrow passage (SP) for the fibre strand (FB).

3. Watering device according to Claim 1, **characterized in that**, as it progresses outside the feedthrough (HD) of the water-storage device, the water-transporting line (WL) has a water-tight casing (HU) around the fibre strand (FB).

4. Watering device according to Claim 3, **characterized in that** the retaining device (ST) uses a lower edge (US), which is directed towards the base (BO) of the storage container (VB), to form a narrow passage (SP) for the fibre strand (FB).

5. Watering device according to Claim 4, **characterized in that** the passage (SP) is of such narrow dimensions that it is possible for only the fibre strand (FB), without the casing (HU), to be fed through.

6. Watering device according to Claim 4 or 5, **characterized in that** the passage (SP) forms a gap parallel to the base (BO).

7. Watering device according to Claim 2, **characterized in that** the passage (SP) forms a gap parallel to the base (BO).

8. Watering device according to one of Claims 3 to 6, **characterized in that** the casing (HU) can be displaced in its longitudinal direction relative to the feedthrough, and the storage container (VB) has a stowage space for the water-transporting line (WL).

9. Watering device according to one of Claims 1 to 8, **characterized in that** the fibre strand (FB) is of band-form design.

## Revendications

1. Dispositif d'arrosage pour des plantes en pot comprenant un dispositif de réserve d'eau et une conduite de transport d'eau (WL) avec un cordon fibreux (FB) fonctionnant par effet capillaire,
- le dispositif de réserve d'eau comprenant un réservoir ouvert vers le haut (VB) et un agencement de couvercle (DA) fermant celui-ci de manière amovible,
- un passage (HD) pour la conduite de transport d'eau étant réalisé au niveau du dispositif de réserve d'eau,
- un dispositif de retenue (ST), pénétrant vers le bas dans l'état assemblé dans le réservoir (VB), étant prévu au niveau de l'agencement de couvercle (DA),
- le dispositif de retenue (ST) étant réalisé pour guider une portion (E1) du cordon fibreux (FB) dans la région du fond (BO) du réservoir (VB),
**caractérisé en ce que**
un élément de fixation (BE) pour la fixation, rigide en traction, de la conduite de transport d'eau (WL) est prévu au niveau de l'agencement de couvercle (DA), l'élément de fixation (BE) étant disposé sur un côté du dispositif de retenue opposé au passage (HD) et étant réalisé pour la fixation de la bande fibreuse (FB, E11).

2. Dispositif d'arrosage selon la revendication 1, **caractérisé en ce que** le dispositif de retenue (ST) forme, avec un bord inférieur (US) tourné vers le fond (BO) du réservoir (VB), un passage étroit (SP) pour le cordon fibreux (FB).

3. Dispositif d'arrosage selon la revendication 1, **caractérisé en ce que** la conduite de transport d'eau (WL) présente, dans son étendue à l'extérieur du passage (HD) du dispositif de réserve d'eau une gaine étanche à l'eau (HU) autour du cordon fibreux (FB).

4. Dispositif d'arrosage selon la revendication 3, **caractérisé en ce que** le dispositif de retenue (ST) forme, avec un bord inférieur (US) tourné vers le fond (BO) du réservoir (VB), un passage étroit (SP) pour le cordon fibreux (FB).

5. Dispositif d'arrosage selon la revendication 4, **caractérisé en ce que** le passage (SP) est dimensionné de manière suffisamment étroite pour que seulement le cordon fibreux (FB) sans gaine (HU) puisse y passer.

6. Dispositif d'arrosage selon la revendication 4 ou 5, **caractérisé en ce que** le passage (SP) forme une fente parallèle au fond (BO).

7. Dispositif d'arrosage selon la revendication 2, **caractérisé en ce que** le passage (SP) forme une fente parallèle au fond (BO).

8. Dispositif d'arrosage selon l'une quelconque des revendications 3 à 6, **caractérisé en ce que** la gaine (HU) peut être déplacée dans sa direction longitudinale par rapport au passage et le réservoir (VB) présente un espace de retenue pour la conduite de transport d'eau (WL).

9. Dispositif d'arrosage selon l'une quelconque des revendications 1 à 8, **caractérisé en ce que** le cordon fibreux (FB) est réalisé en forme de bande.
